# EUROPÄISCHE PATENTANMELDUNG

(11) **EP 2 284 439 A2**
(43) Veröffentlichungstag der Anmeldung: **16.02.2011**
(21) Anmeldenummer: 10007424.4
(22) Anmeldetag: 17.07.2010
(51) Int. Cl.: F21V 14/00, B60Q 1/14, F21S 8/12, H01L 33/60, F21V 19/00, F21V 11/16, F21S 8/10, F21V 7/00, H01L 25/075

(54) **Frontscheinwerfer mit einem LED-Teilfernlichtmodul**

(30) Priorität: 13.08.2009 DE 102009037559
(71) Anmelder: Automotive Lighting Reutlingen GmbH, 72762 Reutlingen (DE)
(72) Erfinder: Brendle, Matthias, 72074 Tübingen (DE); Strauss, Benjamin, 72762 Reutlingen (DE)
(74) Vertreter: Dreiss

(57) **Zusammenfassung**

Vorgestellt wird ein Frontscheinwerfer (1) eines Kraftfahrzeugs mit wenigstens einem Lichtmodul (22), das eine einen Lichtstrom (26) erzeugende Halbleiterlichtquelle (28), eine Kante (30) und ein Optikelement (32) aufweist, und das eine Lichtverteilung des Frontscheinwerfers (1) beeinflusst. Der Frontscheinwerfer zeichnet sich dadurch aus, dass das Optikelement (32) dazu eingerichtet und angeordnet ist, die Kante (30) als parallel zu der Hochachse des Kraftfahrzeugs verlaufende Hell-Dunkel-Grenze (46) abzubilden, und eine Teilfernlicht-Lichtverteilung (44) durch Zuschalten des Lichtmoduls (22) zu wenigstens einem weiteren Lichtmodul (24) zu erzeugen, das jeweils eine eigene Halbleiterlichtquelle (36) und ein eigenes Optikelement (38, 40)aufweist. Darüber hinaus wird ein Beleuchtungssystem eines Kraftfahrzeugs vorgestellt, das solche Frontscheinwerfer beim Auftreten von Gegenverkehr auseinander dreht.

## Beschreibung

Die vorliegende Erfindung betrifft einen Frontscheinwerfer eines Kraftfahrzeugs mit den Merkmalen des Oberbegriffs des Anspruchs 1. Ein solcher Frontscheinwerfer wird im Folgenden auch als LED-Scheinwerfer (LED = Light Emitting Diode) bezeichnet und weist wenigstens ein Lichtmodul mit einer einen Lichtstrom erzeugenden Halbleiterlichtquelle, einer den Lichtstrom begrenzenden Kante und ein Optikelement auf, das eine Lichtverteilung des Frontscheinwerfers beeinflusst.

Darüber hinaus betrifft die Erfindung ein Beleuchtungssystem eines Kraftfahrzeugs nach dem Oberbegriff des Anspruchs 12. Ein solches Beleuchtungssystem weist einen rechten Frontscheinwerfer, einen linken Frontscheinwerfer, eine Sensorik, die für aus dem Fahrzeugvorfeld einfallende elektromagnetische Wellen empfindlich ist, und eine Auswerte- und Steuereinrichtung zur Steuerung der Frontscheinwerfer in Abhängigkeit von Signalen der Sensorik auf. Solche Beleuchtungssysteme sind per se bekannt. Mit der Sensorik, beispielsweise einem Radarsystem, wird das Fahrzeugvorfeld überwacht. Wenn Gegenverkehr detektiert wird, erfolgt bei dem bekannten System gegebenenfalls ein automatisches Abblenden der vorher aufgeblendeten Frontscheinwerfer.

Ein Frontscheinwerfer der eingangs genannten Art ist aus der DE 10 2004 032 797 A1 bekannt. Diese Schrift offenbart einen Frontscheinwerfer mit einer Halbleiterlichtquelle, die aus einem Feld von einzeln schaltbaren LEDs besteht und mit einer Linse als Optikelement, die im Lichtstrom des LED-Feldes so angeordnet ist und die so geformt ist, dass verschiedene Lichtverteilungen durch gezieltes Schalten einzelner Bereiche des LED-Feldes erzeugbar sind. Als Beispiele werden dort insbesondere eine Lichtverteilung eines Hauptlichts, eines Abblendlichts, eines Fernlichts, eines Nebellichts und/oder eines Standlichts genannt. In einer Ausgestaltung wird dort vorgeschlagen, Hell-Dunkel-Grenzen von Funktionen wie Abblendlicht, Nebellicht oder dergleichen durch individuelle Ansteuerung der LEDs des Feldes zu erzeugen, wobei vorbestimmte Bereiche der Leuchtfläche des Feldes ausgeblendet werden.

Als Alternative wird dort weiter eine mechanische Blende vorgeschlagen, die direkt vor der LED Fläche angeordnet ist und gezielt in den erzeugten Lichtstrahl einschwenkbar ist. Die Blende dient einem Erzeugen einer scharfen Hell-Dunkel-Grenze oder einem zusätzlichen Wegblenden von bestimmten Bereichen der als Lichtquelle dienenden LED-Fläche. Die LEDs dienen bei einem solchen LED-Scheinwerfer nicht nur der Realisierung von Signalfunktionen wie Blinken und/oder Tagfahrlicht, sondern insbesondere zur Beleuchtung der Fahrbahn.

Aus der DE 10 2006 061 637 ist ein Frontscheinwerfer bekannt, der eine primäre LED, eine sekundäre LED, eine tertiäre LED und eine für alle drei LED gemeinsame Projektionslinse aufweist. Die primäre LED sendet Licht zur linken Fahrzeugseite aus, um ein linkes Beleuchtungsmuster zu erzeugen. Die sekundäre LED sendet Licht zur rechten Fahrzeugseite aus, um ein rechtes Beleuchtungsmuster zu erzeugen, und die tertiäre LED sendet Licht in einen zwischen dem rechten und dem linken Beleuchtungsmuster liegenden zentralen Bereich aus, um ein zentrales Beleuchtungsmuster zu erzeugen. Zwischen einem rechten Frontscheinwerfer und einem linken Frontscheinwerfer wird dabei nicht unterschieden. Zur Erzeugung von Abblendlicht und von Fernlicht mit ein und demselben Lichtmodul wird eine Blende verwendet, die in der DE 10 2006 061 637 als Abschirmung bezeichnet wird und vertikal beweglich sein soll.

Im Vergleich zu solchen LED-Scheinwerfern sind zur Zeit Xenon-Projektionssysteme für Frontscheinwerfer wesentlich weiter verbreitet. Es ist üblich, mit einem Xenon-Projektionssystem, das eine Gasentladungslampe enthält, verschiedene Lichtverteilungen zu erzeugen und verschiedene Hell-Dunkel-Grenzen auf die Straße zu projizieren. Die verschiedenen Lichtverteilungen und Hell-Dunkel-Grenzen werden durch variable Blenden realisiert, die in der Blendenebene der Projektionssysteme positioniert sind. Die verschiedenen Lichtverteilungen werden also durch gezielte Abschattung einzelner Lichtbündel realisiert, die aus einer Gasentladungslampe als Lichtquelle stammen. Die Abschattung führt prinzipiell zu Verlusten des Lichtstroms, der den Scheinwerfer verlässt. Dies ist jedoch bei Xenon-Systemen unproblematisch, da die Xenon-Lampen einen sehr hohen Lichtstrom liefern.

Eine wichtige neue Lichtfunktion mit sehr spezifischer Hell-Dunkel-Grenze stellt die Teilfernlicht-Funktion dar: Sie besteht aus einer Fernlichtverteilung oder einer Fernlicht-Spot-Verteilung, bei der im Linkseinbau-Scheinwerfer, also im linken Frontscheinwerfer, ein Sektor abgeschattet wird, der ungefähr oberhalb des Horizonts sowie annähernd rechts von einer vertikal verlaufenden imaginären Linie liegt, die den Strahlquerschnitt etwa in seiner Mitte teilt. Für den Rechtseinbau-Scheinwerfer wird der Bereich ungefähr oberhalb des Horizonts sowie näherungsweise links von einer solchen Vertikalen abgeschattet. Dabei wird unter einer Vertikalen eine parallel zur Hochachse des Fahrzeugs verlaufende Linie verstanden. Die Teilfernlicht-Lichtverteilung zeichnet sich also durch oberhalb des Horizontes vertikal verlaufende Hell-Dunkel-Grenzen aus.

Zur Implementierung der Teilfernlicht-Funktion in LED-Scheinwerfern könnte man versuchen, die von Xenon-Modulen bekannten variablen Blenden in LED-Projektionssystemen einzusetzen. Im Gegensatz zu Xenon-Lichtmodulen erzeugen die LED-Projektionsmodule jedoch nur geringere Lichtleistungen, die nur zur Erzeugung einer Spot-Lichtverteilung, d.h. eines Teilfernlicht-Spots ausreichend sind.

Vor diesem Hintergrund besteht die Aufgabe der Erfindung in der Angabe eines LED-Frontscheinwerfers der eingangs genannten Art, der eine Teilfernlicht-Lichtverteilung ohne oder mit allenfalls nur geringen Lichtstromverlusten erzeugt. Mit Blick auf das Beleuchtungssystem der eingangs genannten Art besteht die Aufgabe der Erfindung darin, eine Blendung des Gegenverkehrs durch eine mit solchen Frontscheinwerfern erzeugte Teilfernlichtverteilung trotz der angestrebten geringen Lichtstromverluste zu vermeiden oder zumindest zu verringern.

Mit Blick auf einen LED-Frontscheinwerfer wird die Aufgabe durch die Merkmale des Anspruchs 1 gelöst. Mit Blick auf das Beleuchtungssystem wird die Aufgabe durch die Merkmale des Anspruchs 12 gelöst.

Der erfindungsgemäße Frontscheinwerfer zeichnet sich demnach durch ein Lichtmodul aus, das eine einen Lichtstrom erzeugende Halbleiterlichtquelle, eine den Lichtstrom begrenzende Kante und ein Optikelement aufweist und das eine Lichtverteilung des Frontscheinwerfers beeinflusst. Das Optikelement ist dazu eingerichtet und angeordnet, die den Lichtstrom begrenzende Kante als parallel zu der Hochachse des Kraftfahrzeugs verlaufende Hell-Dunkel-Grenze abzubilden. Es kann als Linse und/oder Reflektor realisiert sein. Der erfindungsgemäße Frontscheinwerfer ist ferner dazu eingerichtet, eine Teilfernlicht-Lichtverteilung durch Zuschalten des Lichtmoduls zu wenigstens einem weiteren Lichtmodul zu erzeugen, das jeweils eine eigene Halbleiterlichtquelle und ein eigenes Optikelement aufweist. Die Teilfernlicht-Lichtverteilung ergibt sich dann durch Überlagerung der Lichtverteilungen der gleichzeitig eingeschalteten Module.

Das weitere Lichtmodul erzeugt zum Beispiel eine Grundlicht-Lichtverteilung mit einer Hell-Dunkel-Grenze. Die Grundlichtverteilung besteht beispielsweise aus einer Abblendlichtverteilung mit einer bevorzugt asymmetrischen Hell-Dunkelgrenze, deren Vorfeld durch ein weiteres Lichtmodul mit großer horizontaler Streuung ergänzt werden kann. Dieses breitgestreute Lichtbündel kann ebenfalls eine horizontale Hell-Dunkelgrenze aufweisen. Die Grundlichtverteilung wird aus mindestens einem Lichtmodul mit mindestens einer Lichtquelle erzeugt. Bevorzugt wird die Verwendung mehrerer Lichtmodule mit jeweils mindestens einer Lichtquelle. Dabei kann die Abblendlichtverteilung schwenkbar ausgeführt sein und die vorfeldausleuchtung kann statisch oder schwenkbar ausgeführt sein. Der erfindungsgemäße Frontscheinwerfer überlagert dieser Grundlicht-Lichtverteilung die Lichtverteilung mit der vertikal verlaufenden Hell-Dunkel-Grenze. Durch die Überlagerung entsteht eine Teilfernlicht-Lichtverteilung, bei der sich eine horizontal verlaufende Hell-Dunkel-Grenze und eine vertikal verlaufende Hell-Dunkel-Grenze kreuzen.

Dies ermöglicht eine weitreichende Ausleuchtung des Fahrzeugvorfeldes unter Aussparung des Bereiches, in dem eine höhere Gefahr einer Blendung des Gegenverkehrs besteht. Dabei kann die gesamte Lichtleistung der beteiligten Lichtmodule für die Beleuchtung genutzt werden.

Eine Modulation größerer Lichtströme durch Abschatten, wie sie bei Xenon-Scheinwerfern üblich ist, wird dadurch vermieden. Im Ergebnis werden damit Lichtstromverluste vermieden, die auf Grund des im Vergleich zu Xenon-Lampen geringeren Lichtstroms der LED-Lichtmodule besonders nachteilig wären.

Das erfindungsgemäße Beleuchtungssystem zeichnet sich dadurch aus, dass wenigstens einer der beiden Frontscheinwerfer die Merkmale von einem der Ansprüche 1 bis 11 aufweist und die Auswerte- und Steuereinrichtung dazu eingerichtet ist, ein Auftreten von Gegenverkehr zu detektieren und die Teilfernlichtlichtverteilung in Abhängigkeit davon, ob Gegenverkehr auftritt oder nicht, zu beeinflussen.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Frontscheinwerfer als technisches Umfeld der Erfindung;
- Fig. 2: eine Ausgestaltung eines Lichtmodulträgers des Frontscheinwerfers der Fig. 1;
- Fig. 3: das Zustandekommen einer Teilfernlicht- Lichtverteilung durch Überlagerung von Lichtverteilungen separater Lichtmodule;
- Fig. 4: eine Ausgestaltung eines Teilfernlicht- Lichtmoduls eines Reflexionssystems;
- Fig. 5: eine aus Blickrichtung y sichtbare Draufsicht auf einen Träger einer Halbleiterlichtquelle und eine Blende mit einer vertikal verlaufenden Kante;
- Fig. 6: eine Ausgestaltung eines Lichtmoduls, das mit einer Projektionslinse als Optikelement arbeitet; und
- Fig. 7: eine zur Darstellung der Figur 5 alternative Ausgestaltung, bei der keine Blende verwendet wird.

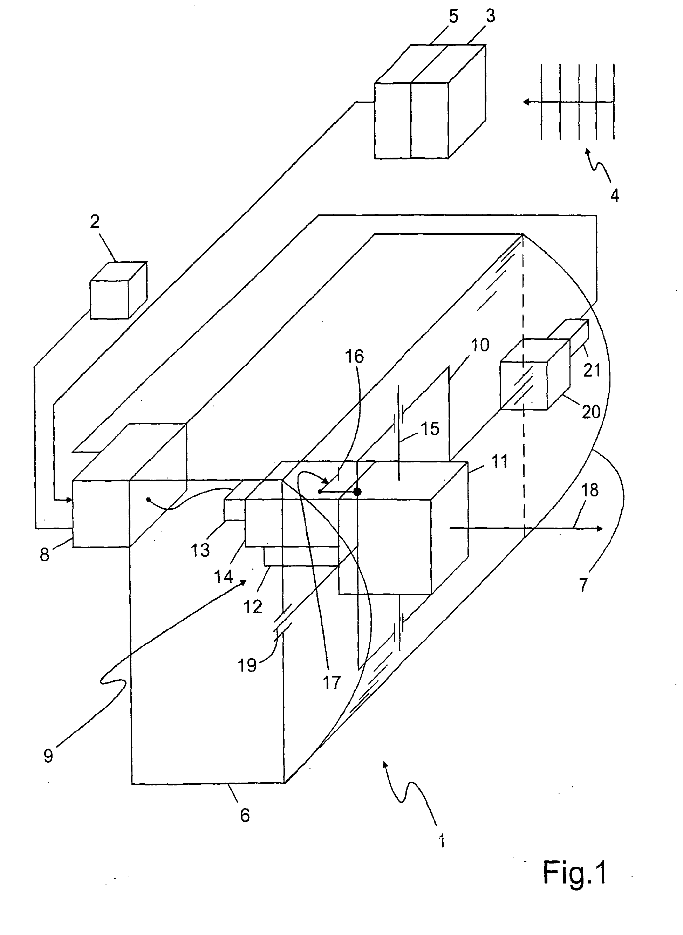

Im Einzelnen zeigt die Fig. 1 einen Frontscheinwerfer 1 sowie einen Lenkwinkelsensor 2 und eine Sensorik 3, die für aus dem Fahrzeugvorfeld einfallende elektromagnetische Wellen 4 empfindlich ist. Bei der Sensorik 3 handelt es sich um jeweils einen oder mehrere Sensoren gleicher oder unterschiedlicher Bauart und Messweise, beispielsweise um eine Kamera oder eine Stereokamera für Licht im sichtbaren Bereich und/oder im Infrarot-Bereich, einen Infrarotsensor oder um den Empfänger eines Radarsystems des Kraftfahrzeugs. Die Signale der Sensorik 3 werden von einer Auswerte- und Steuereinrichtung 5 verarbeitet.

Der Frontscheinwerfer 1 weist ein als Quader dargestelltes Gehäuse 6, eine transparente Abdeckscheibe 7, mindestens ein Steuergerät 8 sowie eine Kurvenlichtbaugruppe 9 auf.

Die Kurvenlichtbaugruppe 9 weist einen Tragrahmen 10, einen Lichtmodulträger 11, ein Steuergerät 12, einen ersten Motor 13 und einen Getriebekasten 14 auf. Dabei ist der Lichtmodulträger 11 um eine vertikale Achse 15 drehbar im Tragrahmen 10 gelagert. Motor 13 und Getriebekasten 14 sind einerseits mit dem Lichtmodulträger 11 und andererseits über eine Getriebeausgangswelle 16 und bewegliche Übertragungsmittel, zum Beispiel eine Hebelmechanik 17, mit dem feststehenden Tragrahmen 10 verbunden und können so ein Verstellmoment zwischen Tragrahmen 10 und Lichtmodulträger 11 ausüben.

Der Lichtmodulträger 11 weist wenigstens ein Lichtmodul auf, das weiter unten mit Bezug auf weitere Figuren noch näher erläutert wird. Das Lichtmodul erzeugt einen Lichtstrom, bündelt diesen, und richtet den gebündelten Lichtstrom in Leuchtrichtung 18 in das Vorfeld des Frontscheinwerfers 1.

Der Lichtmodulträger 11 ist in dem Tragrahmen 10 um die vertikale Achse 15 schwenkbar gelagert. In der dargestellten Ausgestaltung wird eine Schwenkbewegung durch den ersten Motor 13 über ein im Getriebekasten 14 angeordnetes Horizontalschwenkgetriebe und die Übertragungsmittel 17 angetrieben, die die Abtriebswelle 16 des Horizontalschwenkgetriebes mit dem Tragrahmen 10 koppeln. Allgemein gilt, dass der Lichtmodulträger 11 und der Tragrahmen 10 über den ersten Motor 13 sowie über den Getriebekasten 14 motorisch gekoppelt sind.

Der Tragrahmen 10 ist seinerseits drehfest mit der horizontal verlaufenden Achse 19 verbunden, die in der dargestellten schematisierten Ausgestaltung über ein außen am Gehäuse 6 angebrachtes Vertikalschwenkgetriebe 20 und einen zweiten Motor 21 betätigt wird. Die zwei Motoren 13, 21 sind bevorzugt elektrische Motoren, insbesondere Schrittmotoren und werden von einem der Steuergeräte 8 oder 12 betätigt.

Der Lichtmodulträger 11 ist damit kardanisch aufgehängt. Bei Projektionsystemen ist bevorzugt, dass der Schnittpunkt der Schwenkachsen 15, 19 möglichst nahe am Mittelpunkt der Hüllkurven der Außenkontur der Linse liegt.

Über eine Ansteuerung des ersten Motors 13 erfolgt eine Verschwenkung des Lichtmodulträgers 11 und damit der Leuchtrichtung 18 in horizontaler Richtung. In einer bevorzugten Ausgestaltung wird der Motor 13 von dem Steuergerät 8 in Abhängigkeit von einem Lenkwinkel von lenkbaren Rädern des Kraftfahrzeugs so gesteuert, dass die Leuchtrichtung 18 dem Lenkwinkel der lenkbaren Räder folgt. Dabei wird der Lenkwinkel in der dargestellten Ausgestaltung durch den Lenkwinkelsensor 2 erfasst. Die Ansteuerung des zweiten Motors 21 verändert eine Vertikalkomponente der Leuchtrichtung 18 und dient zum Beispiel zur Regelung der Leuchtweite.

In einer Ausgestaltung dient ein Steuergerät des Frontscheinwerfers 1, bspw. das Steuergerät 12, zur Steuerung der Energieversorgung des Lichtmoduls oder der Lichtmodule des Lichtmodulträgers 11. Optional kann das Steuergerät 8 auch Elektronikelemente für die elektrische Ansteuerung der Motoren 13 und/oder 21 enthalten.

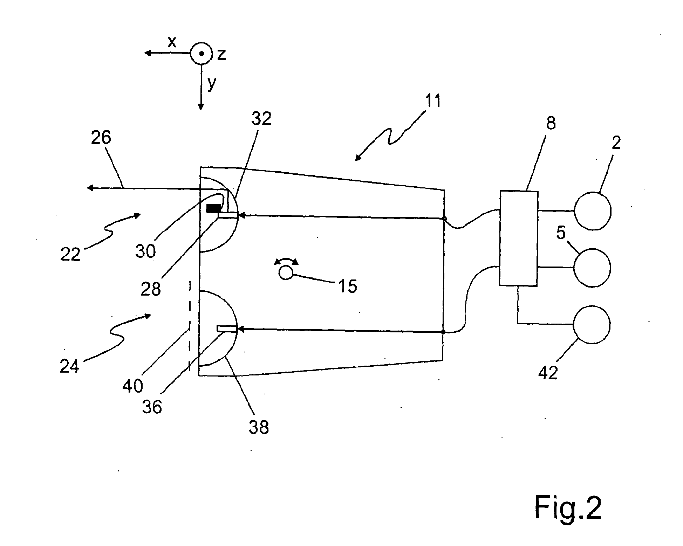

Fig. 2 zeigt eine Ausgestaltung des Lichtmodulträgers 11. Der dargestellte Lichtmodulträger 11 trägt ein erstes Lichtmodul 22, das im Folgenden auch als Teilfernlichtmodul bezeichnet wird, und ein zweites Lichtmodul 24, das im Folgenden auch als Grundlichtmodul bezeichnet wird.

Das Teilfernlichtmodul 22 weist eine einen Lichtstrom 26 erzeugende Halbleiterlichtquelle 28, eine Kante 30 und ein Optikelement 32 auf, das eine Lichtverteilung des Frontscheinwerfers 1 beeinflusst. Die Kante 30 unterstützt die Erzeugung einer Hell-Dunkelgrenze in Verbindung mit dem Optikelement 32. In der dargestellten Ausgestaltung handelt es sich bei dem Optikelement 32 um einen Reflektor, insbesondere einen Reflektor eines Reflexionssystems.

Die Halbleiterlichtquelle 28 liegt näherungsweise im Brennpunkt des Reflektors. Dabei wird eine Anordnung in einem Abstand von weniger als 10 % der Brennweite als Anordnung in der Nähe verstanden. In unmittelbarer Nähe zur Halbleiterlichtquelle 28 befindet sich eine vertikal verlaufende Kante 30, welche die Erzeugung einer Hell-Dunkelgrenze in Verbindung mit dem Reflektor unterstützt. Die optische Achse des Lichtmoduls 22 entspricht der optischen Achse des Reflektors.

Ein Grundlichtmodul, das im Aufbau ähnlich zu einem Abblendlichtmodul ist, kann zusätzlich auf dem Lichtmodulträger 11 dynamisch oder an anderer Stelle im Scheinwerfer statisch vorgesehen sein.

In Verbindung mit Halbleiterlichtquellen werden neben den genannten Reflektoren auch Projektionssysteme eingesetzt. Bei den Projektionssystemen ist die Halbleiterlichtquelle in der Nähe des ersten Brennpunkts eines zwei Brennpunkte oder Brennebenenen aufweisenden Ellipsoid-, Polyellipsoid- oder Freiform-Reflektors angeordnet. Ihr Licht wird in den zweiten Brennpunkt, bzw. die zweite Brennebenene fokussiert, die etwa in der objektseitigen Brennebene einer Freiform-Projektionslinse liegt. In Verbindung mit Halbleiterlichtquellen werden auch transmittierende Systeme als Optikelement 32 eingesetzt, in denen das Licht durch Brechung aber teilweise auch durch interne Totalreflexion in den zweiten Brennpunkt fokussiert wird (Vorsatzoptik).

Der Reflektor bzw. die Vorsatzoptik werden auch als Primäroptik, die Linse als Sekundäroptik bezeichnet.

Die Sekundäroptik wird bevorzugt als einzelne asphärische Linse mit Brennweiten zwischen 40mm und 75mm ausgeführt. Die Linsen können aus lichttechnischen Gründen mindestens teilweise eine regelmäßig oder unregelmäßig strukturierte Oberfläche besitzen. Diese Strukturen weisen eine Höhe von etwa 3µm-30µm zur Linsengrundfläche auf und dienen zur Beeinflussung von Helligkeitsgradienten der Hell-Dunkel-Grenze und/oder von Farbeffekten bei der Abbildung der Blendenoberkante.

Zur korrekten rotatorischen Ausrichtung der Linse werden Markierungen am Linsenrand sowie formschlüssige Kodierungen mit den Linsenhaltern eingesetzt.

Das Grundlichtmodul 24 weist in einer Ausgestaltung ebenfalls eine Halbleiterlichtquelle 36, eine Primäroptik 38 und eine Sekundäroptik 40 auf. Es unterscheidet sich von dem Teilfernlichtmodul 22 dadurch, dass es eine im Wesentlichen asymmetrische Hell-Dunkel-Grenze im Fahrzeugvorfeld erzeugt. In einer Ausgestaltung erfolgt dies durch eine im zweiten Brennpunkt der Primäroptik 38 angeordnete, im Wesentlichen waagerecht verlaufende Blendenkante mit entsprechender Form. Alternativ kann das Lichtmodul aus mehreren Reflektoren bestehen, die auch mehrere Lichtquellen besitzen.

Zur Erzeugung verschiedener Lichtverteilungen, wie z.B. Abblendlicht, Fernlicht, Stadtlicht, Regenlicht, etc. werden die Lichtverteilungen verschiedener gleichzeitig betriebener Lichtmodule überlagert. Dabei erfolgt die Steuerung in der dargestellten Ausgestaltung durch das im Zusammenhang mit der Fig. 1 erläuterte Steuergerät 8, das auch die Schwenkbewegung des Lichtmodulträgers 11 um die vertikale Schwenkachse 15 steuert. Dazu verarbeitet das Steuergerät 8 beispielsweise die Signale des Lenkwinkelsensors 2, der Steuer- und Auswerteeinrichtung 5 und eines Lichtschalters 42. Das Steuergerät 8 schaltet zum Beispiel die Lichtmodule 22 (Teilfernlichtmodul) und 24 (Lichtmodul) in Abhängigkeit vom Signal des Lichtschalters 42 einzeln oder gemeinsam an und/oder aus. Alternativ oder ergänzend erfolgende Steuereingriffe werden weiter unten in Verbindung mit Erläuterungen zur Funktion der Auswerte- und Steuereinrichtung 5 vorgestellt.

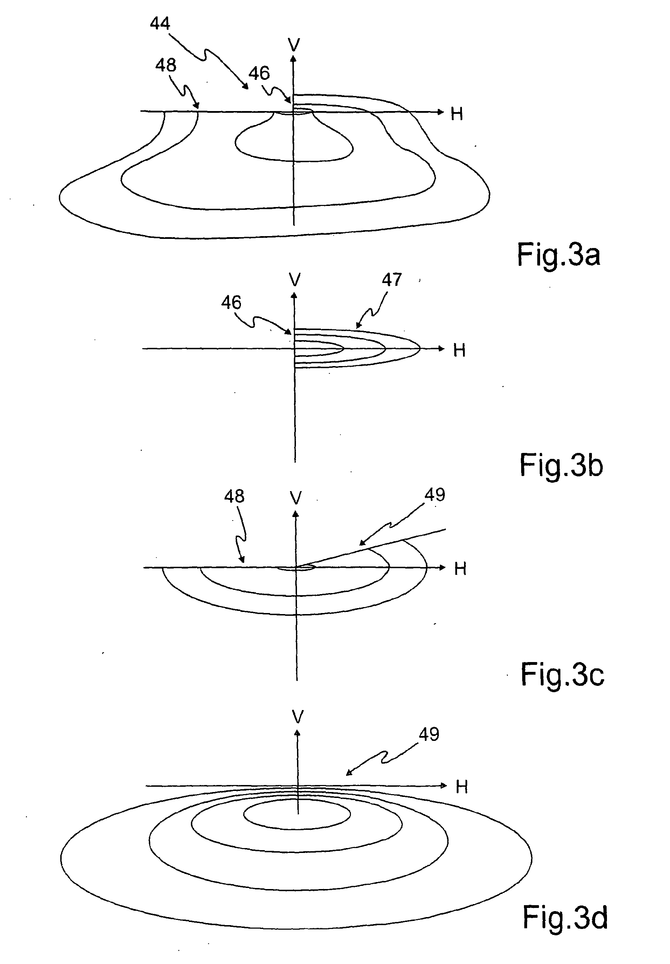

Figur 3 veranschaulicht das Zustandekommen der Teilfernlicht-Lichtverteilung. Die waagerecht verlaufenden H-Achsen schneiden die vertikalen V-Achsen jeweils etwa in einer Höhe, in der ein Fahrer des Kraftfahrzeuges den Horizont wahrnimmt. Die in der H-V-Ebene gekrümmt verlaufenden Linien stellen Linien gleicher Beleuchtungsintensität dar. Dabei nimmt die Beleuchtungsintensität jeder Lichtverteilung jeweils von innen nach außen ab.

Figur 3a zeigt eine Teilfernlicht-Lichtverteilung 44 eines rechten Frontscheinwerfers. Diese Teilfernlicht-Lichtverteilung 44 zeichnet sich durch eine parallel zur Vertikalen V oder auf der Vertikalen V liegende Hell-Dunkel-Grenze 46 sowie durch eine knapp unter dem Horizont H liegende, waagerecht verlaufende Hell-Dunkel-Grenze 48 aus.

Die Vertikale V verläuft als gedachte Linie zwischen einem rechten und einem linken Frontscheinwerfer eines Kraftfahrzeugs oder etwa in der Mitte der Lichtverteilung beider Frontscheinwerfer.

Figur 3 veranschaulicht ferner das Zustandekommen dieser Teilfernlicht-Lichtverteilung durch Überlagern der Lichtverteilungen 47, 49 einzelner Lichtmodule 22, 24.

Die Lichtverteilung 47 nach Figur 3b zeichnet sich durch die vertikale Hell-Dunkel-Grenze 46 aus. Diese

Lichtverteilung 47 wird durch das Lichtmodul 22 der Figur 2 erzeugt. Das Lichtmodul 24 aus der Figur 2 erzeugt dagegen eine Lichtverteilung 49 mit asymmetrisch verlaufender Hell-Dunkel-Grenze 48, wie sie in der Figur 3c dargestellt ist, oder ein breites Lichtband 49, wie es in der Fig. 3d dargestellt ist. Das Lichtband kann nach oben durch eine horizontale Helldunkelgrenze begrenzt sein.

Die Teilfernlicht-Lichtverteilung der Fig. 3a wird dadurch erzeugt, dass das Lichtmodul 22 und das Lichtmodul 24 gleichzeitig eingeschaltet sind, so dass sich ihre einzelnen Lichtverteilungen zu der in Figur 3a dargestellten Teilfernlicht-Lichtverteilung eines rechten Frontscheinwerfers überlagern. Für einen linken Frontscheinwerfer ergibt sich eine Teilfernlicht-Lichtverteilung durch Spiegelung der Lichtverteilung nach Figur 3a an einer rechts von dieser Lichtverteilung in vertikaler Richtung verlaufenden Spiegelachse.

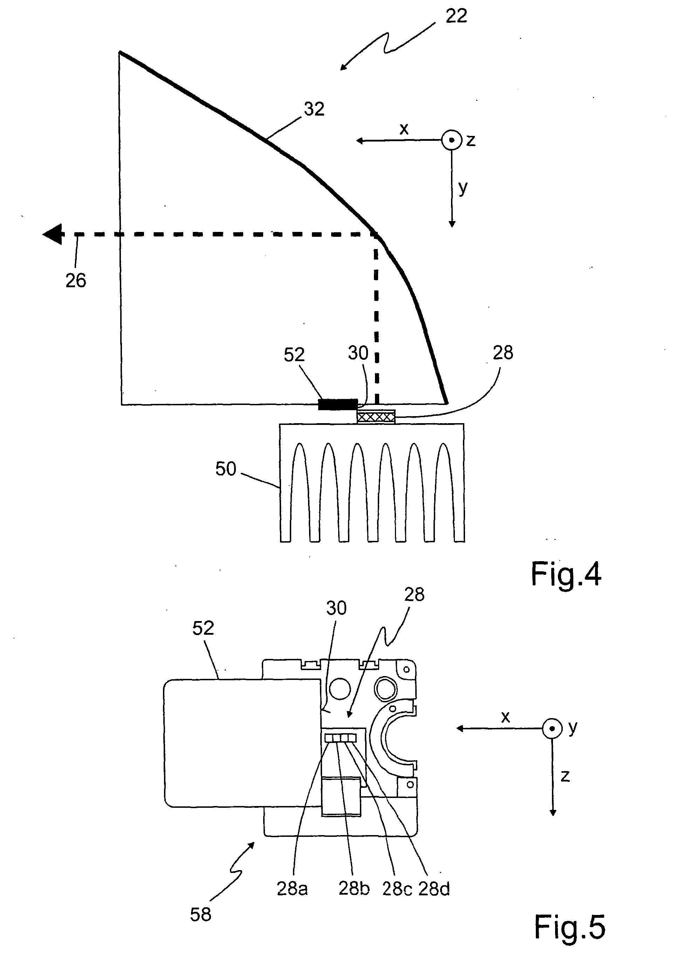

Figur 4 zeigt eine Ausgestaltung eines Teilfernlicht-Lichtmoduls 22 eines linken Frontscheinwerfers im Horizontalschnitt von oben, also entgegen der z-Richtung. Das Lichtmodul 22 weist eine Halbleiterlichtquelle 28 auf, die auf einem Kühlkörper 50 befestigt ist. Der Kühlkörper 50 ist thermisch mit der Halbleiterlichtquelle 28 verbunden und führt die beim Betrieb der Halbleiterlichtquelle 28 entstehende Wärme ab. Der von der Halbleiterlichtquelle 28 ausgehende Lichtstrom 26 wird von einem als Optikelement dienenden Reflektor 32 gebündelt und in den Bereich vor dem Lichtmodul 22 gerichtet. Bei dieser Ausgestaltung handelt es sich demnach um ein Reflexionssystem. Eine Blende 52 besitzt eine den Lichtstrom 26 begrenzende Kante 30. In einer bevorzugten Ausgestaltung ist die Blende 52 und ihre Kante 30 ohne Berührung der Halbleiterlichtquelle 28 in unmittelbarer Nähe der Halbleiterlichtquelle 28 angeordnet. Durch die berührungslose Anordnung wird ein unerwünschter Wärmeübergang von der Halbleiterlichtquelle 28 auf die Blende 52 minimiert. Die Anordnung der Blende 52 in unmittelbarer Nähe zur Halbleiterlichtquelle 28 trägt zu einer scharfen Abbildung der Kante 30 als Hell-Dunkel-Grenze bei. Bevorzugt ist auch, dass die Blende 52 aus Metall besteht. Die Kante 30, die Halbleiterlichtquelle 28 und das Optikelement 32 sind relativ zueinander so angeordnet, dass die Kante 30 bei eingebautem Frontscheinwerfer die Erzeugung einer scharfen Hell-Dunkel-Grenze 46 ermöglicht.

Figur 5 zeigt eine aus Blickrichtung y sichtbare Draufsicht auf einen Träger 58 der Halbleiterlichtquelle 28 und der Blende 52 mit der vertikal (das heißt in z-Richtung) verlaufenden Kante 30. Die Halbleiterlichtquelle 28 weist in der dargestellten Ausgestaltung ein Feld aus vier LEDs 28a, 28b, 28c und 28d auf, die in einer Reihe in x-Richtung angeordnet sind. Ein Randbereich der LED 28a wird durch die Blende 52 überdeckt, um eine scharfe, den Lichtstrom 26 begrenzende Kante 30 zu erzeugen. Die Blende 52 dient damit nicht der Abschattung, sondern nur der Erzeugung einer scharfen Kante 30 im Lichtstrom 26. Die abschattende Wirkung der Blende 52 ist vernachlässigbar. In einer bevorzugten Ausgestaltung wird zur Erzeugung einer Teilfernlicht-Lichtverteilung nur ein Teil der LEDs der Halbleiterlichtquelle 28 eingeschaltet. Die übrigen LEDs werden dann dazugeschaltet, wenn von der Teilfernlicht-Lichtverteilung auf eine Fernlicht-Lichtverteilung umgesteuert wird. In der Ausgestaltung, die in der Figur 3 dargestellt ist, können zum Beispiel die LEDs 28a und/oder 28a und 28b und/oder 28a, 28b und 28c zur Erzeugung der Teilfernlicht-Verteilung verwendet werden, während für eine Fernlicht-Lichtverteilung alle LEDs 28a bis 28d eingeschaltet werden.

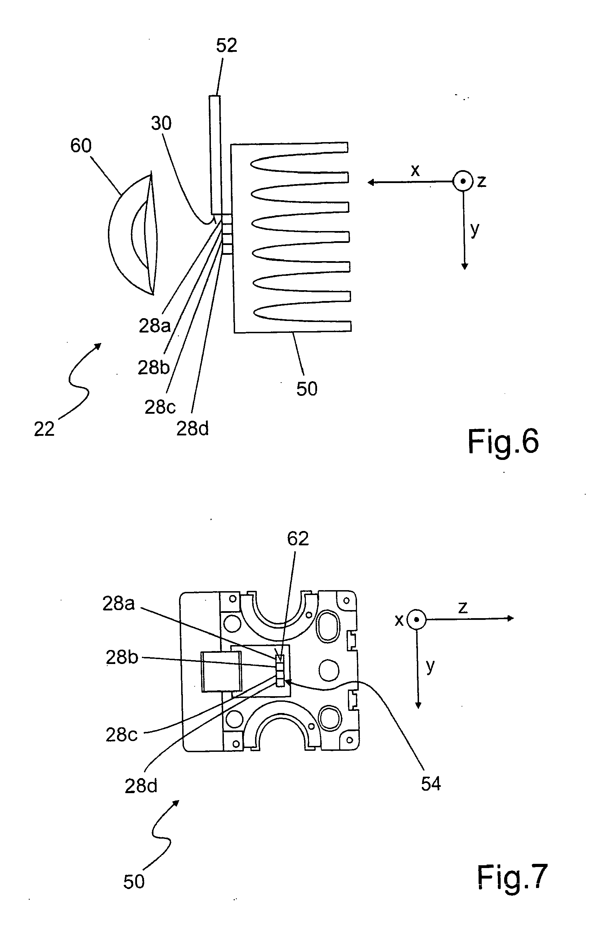

Figur 6 zeigt eine Ausgestaltung eines Lichtmoduls 22, das mit einer Projektionslinse 60 als Optikelement arbeitet. Im Unterschied zum Gegenstand der Fig. 4 handelt es sich demnach um ein Projektionssystem. Die Projektionslinse 60 bündelt das von einer Halbleiterlichtquelle 28 oder von einer Vorsatzoptik der Halbleiterlichtquelle 28 ausgehende Licht und richtet es in das Vorfeld des Lichtmoduls 22. Die Halbleiterlichtquelle 28 besteht auch in der Ausgestaltung, die in der Figur 6 abgebildet ist, aus vier LEDs 28a bis 28d, die individuell oder gruppenweise von einem zugehörigen Steuergerät ein- und ausgeschaltet werden. Es versteht sich aber, dass die Halbleiterlichtquelle 28 auch mehr oder weniger als vier LEDs aufweisen kann. Dies gilt selbstverständlich auch für die Ausgestaltung mit dem Reflektor als Optikelement.

Zur wärmeableitung ist die Halbleiterlichtquelle 28 thermisch an einen Kühlkörper 50 angekoppelt.

Eine Blende 52 besitzt eine den Lichtstrom der Halbleiterlichtquelle 28 begrenzende Kante 30, die einen Randbereich der Halbleiterlichtquelle 28 überdeckt. Auch hier dient die Blende 52 nicht der Abschattung, sondern nur der Erzeugung der scharfen Kante 30 im Lichtstrom. Die Blende 52 ist so angeordnet, dass ihre abschattende Wirkung vernachlässigbar ist.

Auch bei dieser Ausgestaltung wird die vertikale Hell-Dunkel-Grenze in der Lichtverteilung als Bild einer der zwischen der Halbleiterlichtquelle 28 und dem Optikelement angeordneten Blendenkante 30 als Lichtstrom begrenzender Kante erzeugt, wobei hier die Linse 60 das Optikelement bildet.

Ferner gilt auch hier, dass im Rahmen einer Ausgestaltung nur ein Teil der LEDS 28a bis 28d der Halbleiterlichtquelle 28 zur Erzeugung einer Teilfernlicht-Lichtverteilung eingeschaltet wird. Die übrigen LEDs werden in dieser Ausgestaltung zur Erzeugung einer Fernlicht-Lichtverteilung eingeschaltet.

Ferner gilt auch hier, dass die als Optikelement dienende Projektionslinse 60 dazu eingerichtet und angeordnet ist, die den Lichtstrom begrenzende Kante 30 als vertikal verlaufende Hell-Dunkel-Grenze im Vorfeld des Lichtmoduls 22 und damit im Vorfeld des Frontscheinwerfers 1 und des Kraftfahrzeugs abzubilden.

Figur 7 zeigt eine zur Darstellung der Figur 5 alternative Ausgestaltung, bei der keine Blende verwendet wird. Stattdessen wird zum Beispiel die parallel zur z-Richtung und damit vertikal verlaufende linke Kante 62 der LED 28b als den Lichtstrom der LEDs 28b, 28c, 28d begrenzende Kante genutzt. Die LED 28a wird dazugeschaltet, wenn anstelle der Teilfernlicht-Lichtverteilung mit vertikal verlaufender Hell-Dunkel-Grenze eine Fernlicht-Lichtverteilung erzeugt werden soll. Bei dieser Ausgestaltung wird die vertikale Hell-Dunkel-Grenze als Bild der Seitenkante 62 eines LED-Chips oder einer einzelnen LED auf einem LED-Chip der Halbleiterlichtquelle 28 als Lichtstrom begrenzender Kante 62 erzeugt. Diese Ausgestaltung ist sowohl bei einem Reflexionssystem als auch bei einem Projektionssystem verwendbar.

In einer bevorzugten Ausgestaltung ist die den Lichtstrom begrenzende Kante 30 oder 62 in der Nähe der Brennebene des Optikelements 32 oder 60, insbesondere in einem Abstand zur Brennebene, der kleiner als 10% der Brennweite ist, angeordnet. Besonders bevorzugt ist eine Anordnung in der Brennebene. Alle diese Ausgestaltungen zielen darauf, eine möglichst scharfe, vertikal verlaufende Hell-Dunkel-Grenze im Vorfeld des Lichtmoduls 22 zu erzeugen.

Bevorzugt ist auch, dass ein zum Einbau auf der linken Fahrzeugseite vorgesehener Frontscheinwerfer dazu eingerichtet ist, eine links von der vertikal verlaufenden Hell-Dunkel-Grenze liegenden Bereich auszuleuchten.

Dieser gewünschte Effekt ergibt sich jeweils durch die beschriebene relative Anordnung von Halbleiterlichtquelle, Kante und Optikelement.

Entsprechend ist bevorzugt, dass ein zum Einbau auf der rechten Fahrzeugseite vorgesehener Frontscheinwerfer durch die relative Anordnung von Halbleiterlichtquelle, Kante und Optikelement dazu eingerichtet ist, einen rechts von der vertikal verlaufenden Hell-Dunkel-Grenze liegenden Bereich auszuleuchten.

Daher ergibt sich insgesamt eine durch Überlagerung der einzelnen Teilfernlicht-Lichtverteilungen des rechten und des linken Frontscheinwerfers resultierende Teilfernlicht-Lichtverteilung des mit weitreichend, das heißt bis in vergleichsweise große Entfernungen in Fahrtrichtung vor dem Fahrzeug ausgeleuchteten Rändern und einem weniger weitreichend ausgeleuchteten Bereich zwischen diesen Rändern. Im Ergebnis wird dadurch die Erkennbarkeit von Verkehrsschildern, Personen, Tieren oder Hindernissen an den Fahrbahnrändern verbessert, ohne dafür eine unzulässige Blendung des Gegenverkehrs in Kauf nehmen zu müssen.

Bei einem Beleuchtungssystem, das die in Verbindung mit Fig. 1 beschriebene Sensorik 3, die Auswertevorrichtung 5 und mit um eine vertikale Achse schwenkbaren Teilfernlichtmodulen ausgerüstete Frontscheinwerfer für die rechte und die linke Fahrzeugseite aufweist, ergibt sich ferner die folgende Möglichkeit, eine Blendung des Gegenverkehrs bei eingeschaltetem Teilfernlicht unter Beibehaltung einer möglichst weit in das Fahrzeugvorfeld hinausreichenden Beleuchtung zu vermeiden oder zumindest zu verringern:

Die Auswerte- und Steuereinrichtung 5 ist dabei dazu eingerichtet, ein Auftreten von Gegenverkehr zu detektieren. Dies kann durch Vergleichen erfasster Bewegungen von Objekten im Erfassungsbereich der Sensorik 3 aus Fig. 1 durch eine Bildverarbeitung oder durch Auswertung von Relativgeschwindigkeiten und Bewegungstrajektorien erfasster Objekte erfolgen.

Wenn die Auswerte- und Steuereinrichtung 5 Gegenverkehr bei eingeschalteten Teilfernlichtmodulen detektiert, fährt sie in einer bevorzugten Ausgestaltung die Leuchtrichtungen der beiden Frontscheinwerfer nach außen auseinander, indem sie dem jeweiligen Steuergerät 8 des betreffenden Frontscheinwerfers entsprechende Weisungen übermittelt. Durch das Auseinanderdrehen der Leuchtrichtungen wird zwischen den Teilfernlicht-Lichtverteilungen beider Frontscheinwerfer ein vergleichsweise dunkler Bereich gebildet oder vergrößert, der dazu dient, den Gegenverkehr vor einer Blendung zu schützen.

Fährt man dann, wenn kein Gegenverkehr detektiert wird, die Teilfernlicht-Lichtverteilungen beider Frontscheinwerfer soweit zusammen, dass sich die beiden vertikalen Hell-Dunkel-Grenzen berühren oder dass die vertikale Hell-Dunkel-Grenze des einen Frontscheinwerfers bereits im hellen Bereich der Teilfernlichtverteilung des anderen Frontscheinwerfers liegt, ergibt sich eine Fernlicht-Lichtverteilung, die ein separates Fernlicht-Lichtmodul ersetzen oder ergänzen kann.

Eine Verallgemeinerung dieser Ausgestaltung sieht ein Beleuchtungssystem eines Kraftfahrzeugs mit einem rechten Frontscheinwerfer, einem linken Frontscheinwerfer, einer Sensorik 3, die für aus dem Fahrzeugvorfeld einfallende elektromagnetische Wellen 4 empfindlich ist, und eine Auswerte- und Steuereinrichtung 5 zur Steuerung der Frontscheinwerfer vor, wobei wenigstens einer der beiden Frontscheinwerfer ein Teilfernlichtmodul der in dieser Anmeldung vorgestellten Art aufweist und wobei die Auswerte- und Steuereinrichtung 5 dazu eingerichtet ist, ein Auftreten von Gegenverkehr zu detektieren und die Teilfernlichtlichtverteilung in Abhängigkeit davon, ob Gegenverkehr auftritt oder nicht, zu beeinflussen.

Dabei ist bevorzugt, dass die Auswerte- und Steuereinrichtung 5 dazu eingerichtet ist, beim Auftreten von Gegenverkehr eine aufgesteuerte Teilfernlichtverteilung abzusteuern und/oder dann, wenn kein Gegenverkehr auftritt, eine abgesteuerte Teilfernlichtlichtverteilung aufzusteuern.

Das Aufsteuern und Absteuern erfolgt in einer weiteren Ausgestaltung durch Dimmen, alternativ durch Einschalten und Ausschalten.

Eine weitere bevorzugte Ausgestaltung sieht vor, dass bei einem für Rechtsverkehr eingerichteten Fahrzeug nur der rechte Frontscheinwerfer ein Teilfernlichtmodul der in dieser Anmeldung vorgestellten Art aufweist.

Bei einem bei einem für Linksverkehr eingerichteten Fahrzeug sieht eine weitere Ausgestaltung vor, dass nur der linke Frontscheinwerfer ein Teilfernlichtmodul der in dieser Anmeldung vorgestellten Art aufweist.

Der jeweils andere Frontscheinwerfer weist bevorzugt nur ein konventionelles Fernlichtmodul, d.h. ein Fernlichtmodul ohne vertikale Hell-Dunkel-Grenze auf.

Diese Ausgestaltungen lassen sich ohne eine Schwenkbarkeit der Teilfernlichtmodule realisieren, was sehr kostengünstige Varianten ergibt.

Eine weitere Ausgestaltung zeichnet sich dadurch aus, dass wenigstens einer der beiden Frontscheinwerfer ein schwenkbares Teilfernlichtmodul aufweist und dass die Auswerte- und Steuereinrichtung 5 dazu eingerichtet ist, die Leuchtrichtung des schwenkbaren Teilfernlichtmoduls beim Auftreten von Gegenverkehr von einer mittleren Leuchtrichtung nach Außen zu schwenken.

Bei einer alternativen Ausgestaltung weisen beide Frontscheinwerfer ein schwenkbares Teilfernlichtmodul auf, und die Auswerte- und Steuereinrichtung 5 ist dazu eingerichtet, die Leuchtrichtungen der beiden Frontscheinwerfer beim Auftreten von Gegenverkehr von einer mittleren Richtung nach außen auseinander zu schwenken.

Diese Ausgestaltung hat den besonderen Vorteil, dass eine Blendung des Gegenverkehr vermieden werden kann, ohne das Teilfernlichtmodul abschalten zu müssen. Das Auge des Fahrers muss sich daher nicht an die beim Aus- und Einschalten auftretenden Helligkeitsunterschiede adaptieren.

In diesen Ausgestaltungen ist es ferner vorteilhaft, einzelne LEDs, die, wie weiter oben beschrieben wurde, im Teilfernlichtbetrieb stromlos bleiben, im Fernlichtbetrieb zuzuschalten, um so den zusätzlichen Lichtstrom für den Fernlichtbetrieb zu erzeugen. Bei Ausgestaltungen, bei denen statt einer Blendenkante 30 die Seitenkante 62 eines LED-Chips für die Erzeugung der Hell-Dunkel-Grenze verwendet wird, sieht eine weitere Ausgestaltung vor, die Hell-Dunkel-Grenze durch Zuschalten weiterer LEDs aufzulösen, das heißt, auch den Bereich auf der vorher dunklen Seite der Hell-Dunkel-Grenze zu beleuchten.

Eine weitere Ausgestaltung sieht eine Markierungslichtfunktion vor. Dabei wird unter einem Markierungslicht eine Lichtverteilung verstanden, die eine geringe horizontale Ausdehnung und mindestens eine vertikale Helldunkelgrenze aufweist.

Mit dieser Lichtverteilung können Gefahrenobjekte, die von der Auswerte- und Steuerelektronik zur Steuerung der Scheinwerfer im räumlichen Vorfeld des Kraftfahrzeugs detektiert werden, gezielt angestrahlt bzw. angeblinkt und dadurch mit besonders hellem Licht markiert werden. Ein Gefahrenobjekt ist dabei zum Beispiel jedes Objekt, für das die Auswerte- und Steuereinrichtung 5 eine Kollisionsgefahr mit dem eigenen Fahrzeug erkennt. Es kann sich dabei um andere Verkehrsteilnehmer oder um ruhende oder sich bewegende Objekte wie Pfosten, Bälle, Wildtiere, etc. handeln.

Das Markierungslicht wird bevorzugt durch eine der folgenden Alternativen erzeugt.

Alle Alternativen setzen ein schwenkbares, vergleichsweise stark gebündeltes Lichtbündel als Markierungslichtbündel voraus, das jeweils individuell, also unabhängig von den anderen Lichtfunktionen, ein- und ausgeschaltet werden kann. Das Lichtmodul kann als Reflexionssystem wie in Fig. 4 oder als Transmissionssystem wie in Fig. 6 realisiert werden. Die Lichtverteilung liegt im wesentlichen über der horizontalen Helldunkelgrenze des Abblendlichts und hat in der Horizontalen einen Öffnungswinkel der den gesetzlichen Mindestanforderungen für Fernlicht genügt oder der wesentlich geringer ist als bei einer Fernlichtlichtverteilung. Die Lichtverteilung besitzt mindestens eine vertikale Helldunkelgrenze.

In der ersten Ausführung wird das Markierungslicht durch ein schmales, erfindungsgemäßes Fernlichtbündel realisiert, das von einem Lichtmodul erzeugt wird, das im Gehäuse des auf der Gegenverkehrsseite eingebauten Scheinwerfers erzeugt wird und das die gesetzlichen Mindestanforderungen hinsichtlich des horizontalen Öffnungswinkels und den entsprechenden Lichtwerten erfüllt. Diese Ausführungsvariante hat den Vorteil, dass keine zusätzlichen Lichtmodule im Scheinwerfer integriert werden müssen. Bei dieser Ausführungsvariante wird das Fernlichtmodul im Scheinwerfer auf der Gegenverkehrsseite als Markierungslicht verwendet, wenn der Verkehr nur Abblendlicht oder Fernlicht auf der eigenen Fahrbahnseite zulässt.

In der zweiten Ausführungsvariante wird ein separates Lichtmodul zur Erzeugung des Markierungslichts auf den schwenkbaren Träger des Fernlichtmoduls bevorzugt im Scheinwerfergehäuse der Gegenverkehrsseite hinzugefügt. Die Lichtverteilung besitzt zwei vertikale Helldunkelgrenzen mit einer horizontalen Winkelausdehnung von 1,5° bis 6°, bevorzugt ist ein Bereich von 2,5° bis 3,5°. Bei dieser Ausführungsvariante wird im Scheinwerfergehäuse zusätzlicher Platz für das Lichtmodul benötigt. Durch die Montage des Markierungslichtmoduls auf dem schwenkbaren Träger des Fernlichtmoduls entsteht nur geringfügig zusätzlicher Bedarf für den Bauraum. Ein Markierungslicht in dieser Ausführung kann betrieben werden wie das Markierungslicht der ersten Ausführungsvariante, durch das separate Markierungslichtmodul und die von diesem erzeugte Lichtverteilung kann eine prägnantere Markierung als in der ersten Ausführungsvariante erreicht werden.

In einer weiteren Ausführungsvariante wird das Markierungslicht als separates zusätzliches Lichtmodul auf einem eigenen schwenkbaren Träger bevorzugt im Scheinwerfer der Gegenverkehrsseite realisiert. Die Lichtverteilung besitzt ebenfalls eine horizontale Winkelausdehnung von 1,5° bis 6° bevorzugt ist ein Bereich von 2,5° bis 3,5°. In dieser Ausführungsvariante kann mit dem Markierungslicht auch ein Gefahrenobjekt angestrahlt werden, das sich beim Teilfernlichtbetrieb im dem Bereich befindet, der gerade ausgeblendet ist.

## Patentansprüche

1. Frontscheinwerfer (1) eines Kraftfahrzeugs mit wenigstens einem Lichtmodul (22), das eine einen Lichtstrom (26) erzeugende Halbleiterlichtquelle (28), eine Kante (30) und ein Optikelement (32) aufweist, und das eine Lichtverteilung des Frontscheinwerfers (1) beeinflusst, **dadurch gekennzeichnet, dass** das Optikelement (32) dazu eingerichtet und angeordnet ist, die Kante (30) als parallel zu der Hochachse dem Kraftfahrzeugs verlaufende Hell-Dunkel-Grenze (46) abzubilden, und dass der Frontscheinwerfer (1) dazu eingerichtet ist, eine Teilfernlicht-Lichtverteilung (44) durch Zuschalten des Lichtmoduls (22) zu wenigstens einem weiteren Lichtmodul (24) zu erzeugen, das jeweils eine eigene Halbleiterlichtquelle (36) und ein eigenes Optikelement (38, 40)aufweist.

2. Frontscheinwerfer (1) nach Anspruch 1, **dadurch gekennzeichnet, dass** das Optikelement (32) als Linse oder als Reflektor ausgeführt ist.

3. Frontscheinwerfer (1) nach einem der vorhergehenden Ansprüche, **dadurch gekennzeichnet, dass** die vertikale Hell-Dunkel-Grenze (46) als Bild einer zwischen der Halbleiterlichtquelle (28) und dem Optikelement (32) angeordneten Blendenkante (30) erzeugt wird.

4. Frontscheinwerfer (1) nach Anspruch 3 ,**dadurch gekennzeichnet, dass** die Blendenkante (30) ohne Berührung der Halbleiterlichtquelle (28) in unmittelbarer Nähe der Halbleiterlichtquelle (28) angeordnet ist.

5. Frontscheinwerfer (1) nach einem der vorhergehenden Ansprüche, **dadurch gekennzeichnet, dass** die vertikale Hell-Dunkel-Grenze als Bild einer Seitenkante einer LED der Halbleiterlichtquelle (28) als Kante erzeugt wird.

6. Frontscheinwerfer (1) nach einem der vorhergehenden Ansprüche, **dadurch gekennzeichnet, dass** die Kante in der Nähe der Brennebene des Optikelements angeordnet ist.

7. Frontscheinwerfer (1) nach einem der Ansprüche 1 bis 6, **dadurch gekennzeichnet, dass** er zum Einbau auf einer rechten Seite des Kraftfahrzeugs und zum Ausleuchten eines rechts von der vertikalen Hell-Dunkel-Grenze liegenden Bereiches eingerichtet ist.

8. Frontscheinwerfer (1) nach einem der vorhergehenden Ansprüche, **dadurch gekennzeichnet, dass** er zum Einbau auf einer linken Seite des Kraftfahrzeugs und zum Ausleuchten eines links von der vertikalen Hell-Dunkel-Grenze liegenden Bereiches eingerichtet ist.

9. Frontscheinwerfer nach einem der vorhergehenden Ansprüche, **dadurch gekennzeichnet, dass** das Lichtmodul (22) um eine im eingebauten Zustand des Frontscheinwerfers (1) parallel zu der Hochachse des Kraftfahrzeugs verlaufende Achse (15) schwenkbar ist.

10. Frontscheinwerfer (1) nach Anspruch 9, **dadurch gekennzeichnet, dass** er dazu eingerichtet ist, in einer zweiten Schwenkstellung wenigstens eine zusätzliche Halbleiterlichtquelle zu aktivieren, die in einer ersten Schwenkstellung nicht aktiviert wird.

11. Frontscheinwerfer (1) nach einem der vorhergehenden Ansprüche, **dadurch gekennzeichnet, dass** eine Teilfernlicht-Lichtverteilung (44) durch Zuschalten des Lichtmoduls (22) zu wenigstens einem weiteren Lichtmodul (24) erzeugt wird.

12. Beleuchtungssystem eines Kraftfahrzeugs mit einem rechten Frontscheinwerfer, einem linken Frontscheinwerfer, einer Sensorik (3), die für aus dem Fahrzeugvorfeld einfallende elektromagnetische Wellen (4) empfindlich ist, und mit einer Auswerte- und Steuereinrichtung (5) zur Steuerung der Frontscheinwerfer, **dadurch gekennzeichnet, dass** wenigstens einer der beiden Frontscheinwerfer die Merkmale von einem der Ansprüche 1 bis 11 aufweist und die Auswerte- und Steuereinrichtung (5) dazu eingerichtet ist, ein Auftreten von Gegenverkehr zu detektieren und die Teilfernlichtlichtverteilung in Abhängigkeit davon, ob Gegenverkehr auftritt oder nicht, zu beeinflussen.

13. Beleuchtungssystem nach Anspruch 12, **dadurch gekennzeichnet, dass** die Auswerte- und Steuereinrichtung (5) dazu eingerichtet ist, beim Auftreten von Gegenverkehr eine aufgesteuerte Teilfernlichtverteilung abzusteuern und/oder dann, wenn kein Gegenverkehr auftritt, eine abgesteuerte Teilfernlichtlichtverteilung aufzusteuern.

14. Beleuchtungssystem nach Anspruch 13, **dadurch gekennzeichnet, dass** das Aufsteuern und Absteuern durch Dimmen erfolgt.

15. Beleuchtungssystem nach einem der Ansprüche 12 bis 14, **dadurch gekennzeichnet, dass** bei einem für Rechtsverkehr eingerichteten Fahrzeug nur der rechte Frontscheinwerfer die Merkmale von einem der Ansprüche 1 bis 11 aufweist.

16. Beleuchtungssystem nach einem der Ansprüche 12 bis 14, **dadurch gekennzeichnet, dass** bei einem für Linksverkehr eingerichteten Fahrzeug nur der linke Frontscheinwerfer die Merkmale von einem der Ansprüche 1 bis 11 aufweist.

17. Beleuchtungssystem nach einem der Ansprüche 12 bis 14, **dadurch gekennzeichnet, dass** wenigstens einer der beiden Frontscheinwerfer ein schwenkbares Teilfernlichtmodul aufweist und dass die Auswerte- und Steuereinrichtung (5) dazu eingerichtet ist, die Leuchtrichtung des schwenkbaren Teilfernlichtmoduls beim Auftreten von Gegenverkehr von einer mittleren Leuchtrichtung nach Außen zu schwenken.

18. Beleuchtungssystem nach einem der Ansprüche 12 bis 14, **dadurch gekennzeichnet, dass** beide Frontscheinwerfer ein schwenkbares Teilfernlichtmodul aufweisen und dass Auswerte- und Steuereinrichtung (5) dazu eingerichtet ist, die Leuchtrichtungen der beiden Frontscheinwerfer beim Auftreten von Gegenverkehr von einer mittleren Richtung nach außen auseinander zu schwenken.
